# EUROPEAN PATENT APPLICATION

(11) **EP 2 846 244 A1**
(43) Date of publication of application: **11.03.2015**
(21) Application number: 14003039.6
(22) Date of filing: 03.09.2014
(51) Int. Cl.: G06F 3/0488

(54) **Information processing device with a touch screen, control method and program**

(30) Priority: 04.09.2013 JP 2013183457
(71) Applicant: NEC Personal Computers, Ltd., Shinagawa-ku Tokyo 141-0032 (JP)
(72) Inventor: Yamanaka, Yoichiro, Tokyo, 1410032 (JP); Yagi, Yasunari, Tokyo, 1410032 (JP)
(74) Representative: Kador & Partner

(57) **Abstract**

A section for receiving a code from a keyboard including ordinary and special keys, a section for executing a predetermined command at reception of a code generated when the special and ordinary key are simultaneously operated, a display for displaying an operation button, a section for detecting contact with the operation button, a section for displaying, operation menus including a predetermined operation menu items determined in advance, the operation menu items being assigned to the operation button, a command menu from which it is possible to select a command to be executed corresponding to a code generated in response to an operation in which one special and normal key are simultaneously operated is displayed as the operation menus at detection of the contact with the operation button, the predetermined command is executed when either one command is selected from the operation menus successively after the contact with the operation button.

## Description

### BACKGROUND OF THE INVENTION

### Field of the Invention

The present invention relates to an information processor, a control method, and a program.

### Description of the Prior Art

Recently, information processors representatively including a smart phone, a cellular phone, an electronic information terminal, a Personal Digital Assistant (PDA), a notebook Personal Computer (PC), and a tablet PC are rapidly coming into wide use. Some information processors include a display equipped with a touch panel function to improve operability. In the display including the touch panel function, the display area is also used as the touch area in general. Further, personal computers in a construction capable of changing the operation mode between the notebook mode and the tablet mode are also coming into broad use.

In an information processor on which a display including the touch panel function is mounted, gesture of a finger or a stylus pen is detected via a touch panel display. The information processor operates according to the gesture thus detected. The basic operation of the information processor is implemented by an Operating System (OS) such as Windows (registered trademark) installed in the information processor.

In a tablet PC, the liquid-crystal display as a display thereof includes the touch panel function. Hence, information can be inputted without using a hardware keyboard and the like. In such tablet PC, information pieces such as letters and characters are mainly inputted via the touch panel. That is, the PC has a high degree of freedom with respect to the size and the shape of the PC itself. This leads to an advantage of superior browsing performance in presenting information on the display.

Heretofore, the information processors such as personal computers have primarily processed data of characters inputted from hardware keyboards. In processing of images, the mouse has been primarily employed. Recently, tablet PCs capable of conducting the pen input operation are increasingly used. The tablet PCs are devised in consideration of the image of a pen and a sheet of paper for use in the daily life. That is, the tablet PCs include no hardware keyboard. In the tablet PCs, in addition to the input of images and drawings, the character input is possible through operation similar to the operation to write characters on a sheet of paper. Hence, the tablet PCs are familiar tools for the users of the generation who are familiar with the tablet PCs and who have not a long experience of the character input operation from the hardware keyboard.

The tablet PCs provide a particular input operation called "pinch out" in which pointers are dragged in mutually opposing directions to be apart from each other to widen an area surrounded by pointers, to thereby display a magnified image. Such multi-touch operations include flick, swipe, and pinch-in. The flick is an operation in which an operation to click a pointer and an operation to move a pointer are simultaneously carried out. The swipe indicates an operation to be used, for example, in the screen scrolling operation such that after the pointer is removed from the tablet, the screen scrolling continues. The pinch-in is an operation reverse to the pinch-out. When the pointers are dragged in the direction to approach each other, the area surrounded by pointers is reduced, to thereby display a contracted image.

In the tablet PC including a touch panel display to input handwritten letters, the operation to input letters from a keyboard (software keyboard) displayed as an image on the touch panel display is employed together with the operation to input handwritten letters depending on cases. The software keyboard is a keyboard image presented on the display in which key images corresponding to the Japanese cursive syllabary or hiragana or the angular Japanese phonic syllabary or katakana and alphabetic letters are arranged in predetermined orders, specifically, in the order of the Japanese syllabary and the alphabetic order. When a key on the keyboard image thus displayed is indicated by a pointing device, the function of the key is implemented like when a key is depressed in the hardware keyboard.

According to this technique, in place of the use of the hardware keyboard and the mouse as in the PCs of the prior art, there is provided a method of inputting sentences in which characters and letters are inputted through the handwritten letter recognition or by use of the software keyboard on the screen. However, the letter input speed in the handwritten letter recognition is restricted by, for example, the input speed of handwritten letters and the recognition error correction by the PC at erroneous recognition of handwritten letters. In the character input method using the software keyboard, it is required to correctly and continuously input letters from the small software keyboard displayed on the screen. This leads to a problem that the operation to input letters and to convert the letters takes a long period of time and causes fatigue of user's optic nerves.

On the other hand, when a hardware keyboard is employed, it is possible to carry out an operation called shortcut. The shortcut is a function in which a command can be executed, without opening a menu, by use of a combination of a special key other than the ordinary keys and an ordinary key. In general, the shortcut function is set to operations to be frequently used, for example, copy and paste operations.

For example, in an application of Windows (registered trademark), when the user presses a particular ordinary key while pushing Ctrl key as a special key, a particular command can be executed by use of the hardware keyboard without selecting an associated command from the menu. This leads to advantages that the operation efficiency is improved through a simpler operation when compared with the situation in which the mouse is employed for the operation.

Under these circumstances, Japanese Patent Pub. No. 3385965 describes an information terminal. In operation of the information terminal, in a state wherein a range of a character string "123456789" is selected and is displayed in a reversing display mode, when the pen is kept in contact with the position of character "9" on the transparent touch panel, the hold operation is assumed and a shortcut menu to conduct a plurality of operations (cut, copy, and the like) which can be conducted for the character string is displayed in the neighborhood of the character string "123456789". In the situation in which the shortcut menu is displayed, when the pen is removed from the transparent touch panel, the shortcut menu is kept displayed. Hence, when a cut operation is tapped in the shortcut menu by the pen, the character string "123456789" is cut out to be stored in a buffer memory.

However, in the tablet PC of the prior art, most information pieces such as characters are basically inputted by using the dominant hand of the user as described above. Hence, when compared with a situation using the hardware keyboard in which both hands are used to conduct operations, there arises a problem that the user cannot conduct the intuitive operation of the shortcut function, which is available when the hardware keyboard is employed. Particularly, when the tablet PCs are introduced, the users having a long experience of the character input operation from the hardware keyboard will not be satisfied with operability of the tablet PC because they cannot operate the shortcut function with which they are familiar.

In the technique described in Japanese Patent Pub. No. 3385965, the user conducts all operations basically by use of only the dominant hand such that after the range for the operations of "cut", "copy", and the like are conducted, a shortcut menu is displayed to carry out a desired operation. However, the shortcut function is accomplished only through the input operations by using the dominant hand on the touch panel display not including the hardware keyboard. This results in a problem that the operation of the shortcut function using the dominant hand is not easy for the users having a long experience of the character input operation using both hands from the hardware keyboard.

### SUMMARY OF THE INVENTION

It is therefore an object of the present invention, which has been made in consideration of the problems above, to provide an information processor, a control method, and a program wherein in an information processor including a touch panel display, it is possible, by disposing an auxiliary user interface, to implement the shortcut operation conventionally accomplished on the hardware keyboard, to thereby improve operability based on intuitive operation of the tablet terminal.

In one or more embodiments of the present invention, there is provided an information processor including:
keyboard connecting means for receiving a code from a keyboard including a plurality of ordinary keys each of which generates a predetermined code according to an operation and a plurality of special keys each of which changes the predetermined code generated by the ordinary key according to an operation;
command executing means for executing a predetermined command at reception of a code generated when the special key and the ordinary key are simultaneously operated;
a touch panel display for displaying an operation button;
detecting means for detecting contact with the operation button; and
display means for displaying, on the touch panel display, an operation menu including a predetermined number of operation menu items determined in advance, the operation menu items being assigned to the operation button the contact with which is detected by the detecting means, wherein
the display means displays, as the operation menu at detection of the contact with the operation button, a command menu from which it is possible to select a command to be executed corresponding to a code generated in response to an operation in which one of the special keys and one of the normal keys are simultaneously operated, and
the command executing means executes the predetermined command when either one command is selected from the operation menu successively after the contact with the operation button.

In one or more embodiments of the present invention, there is provided a control method for use with an information processor including:
keyboard connecting means for receiving a code from a keyboard including a plurality of ordinary keys each of which generates a predetermined code according to an operation and a plurality of special keys each of which changes the predetermined code generated by the ordinary key according to an operation;
command executing means for executing a predetermined command at reception of a code generated when the special key and the ordinary key are simultaneously operated; and
a touch panel display for displaying an operation button, the control method including:
   a step of detecting contact with the operation button;
   a step of displaying, on the touch panel display, an operation menu including a predetermined number of operation menu items determined in advance, the operation menu items being assigned to the operation button the contact with which is detected by the detecting step;
   a step of displaying, as the operation menu at detection of the contact with the operation button, a command menu from which it is possible to select a command to be executed corresponding to a code generated in response to an operation in which one of the special keys and one of the normal keys are simultaneously operated; and
   a step of executing the predetermined command when either one command is selected from the operation menu successively after the contact with the operation button.

In one or more embodiments of the present invention, there is provided a program for use with a computer of an information processor, including:
keyboard connecting means for receiving a code from a keyboard including a plurality of ordinary keys each of which generates a predetermined code according to an operation and a plurality of special keys each of which changes the predetermined code generated by the ordinary key according to an operation;
command executing means for executing a predetermined command at reception of a code generated when the special key and the ordinary key are simultaneously operated; and
a touch panel display for displaying an operation button, the program making the information processor execute:
   processing for detecting contact with the operation button;
   processing for displaying, on the touch panel display, an operation menu including a predetermined number of operation menu items determined in advance, the operation menu items being assigned to the operation button the contact with which is detected by the detecting processing;
   processing for displaying, as the operation menu at detection of the contact with the operation button, a command menu from which it is possible to select a command to be executed corresponding to a code generated in response to an operation in which one of the special keys and one of the normal keys are simultaneously operated; and
   processing for executing the predetermined command when either one command is selected from the operation menu successively after the contact with the operation button.

In accordance with the present invention, there are provided an information processor, a control method, and a program wherein it is possible to implement the shortcut operation conventionally accomplished on the hardware keyboard, to thereby improve operability based on intuitive operation of the tablet terminal.

### BRIEF DESCRIPTION OF THE DRAWINGS

The objects and features of the present invention will become more apparent from the consideration of the following detailed description taken in conjunction with the accompanying drawings in which:
FIG. 1 is a schematic block diagram to explain a configuration of an information processor in an embodiment of the present invention;
FIG. 2 is a diagram to explain a situation in which a special key section is displayed on the left side of the touch panel display of the information processor in the embodiment;
FIG. 3 is a diagram to explain a situation in which a special key section is displayed on the right side of the touch panel display of the information processor in the embodiment;
FIG. 4 is a diagram to explain the special key section of the information processor in the embodiment;
FIG. 5 is a diagram (1) to explain a display example of an operation menu displayed in response to an operation to hold a tapped state in the special key section of the information processor in the embodiment;
FIG. 6 is a diagram (2) to explain a display example of an operation menu displayed in response to an operation to hold a tapped state in the special key section of the information processor;
FIG. 7 is a diagram (3) to explain a display example of an operation menu displayed in response to an operation to hold a tapped state in the special key section of the information processor;
FIG. 8 is a diagram (4) to explain a display example of an operation menu displayed in response to an operation to hold a tapped state in the special key section of the information processor;
FIG. 9 is a diagram (5) to explain a display example of an operation menu displayed in response to an operation to hold a tapped state in the special key section of the information processor; and
FIG. 10 is a flowchart to explain an operation of the information processor in the embodiment.

### DESCRIPTION OF THE EMBODIMENTS

Referring next to the drawings, description will be given in detail of one or more embodiments of the present invention. In the drawings, the same or corresponding constituent components are assigned with the same reference numerals, and description will be briefly given of such components or description thereof will be avoided according to necessity. In an information processor in accordance with the present invention, it is possible to implement the shortcut operation conventionally accomplished on the hardware keyboard, to thereby improve operability based on intuitive operation of the tablet terminal. The information processor includes:
a keyboard connecting section for receiving a code from a keyboard including a plurality of ordinary keys each of which generates a predetermined code according to an operation and a plurality of special keys each of which changes the predetermined code generated by the ordinary key according to an operation;
a command executing section for executing a predetermined command at reception of a code generated when the special key and the ordinary key are simultaneously operated;
a touch panel display for displaying an operation button;
a detecting section for detecting contact with the operation button; and
a display section for displaying, on the touch panel display, an operation menu including a predetermined number of operation menu items determined in advance, the operation menu items being assigned to the operation button the contact with which is detected by the detecting section, wherein
the display section displays, as the operation menu at detection of the contact with the operation button, a command menu from which it is possible to select a command to be executed corresponding to a code generated in response to an operation in which one of the special keys and one of the normal keys are simultaneously operated, and
the command executing section executes the predetermined command when either one command is selected from the operation menu successively after the contact with the operation button.

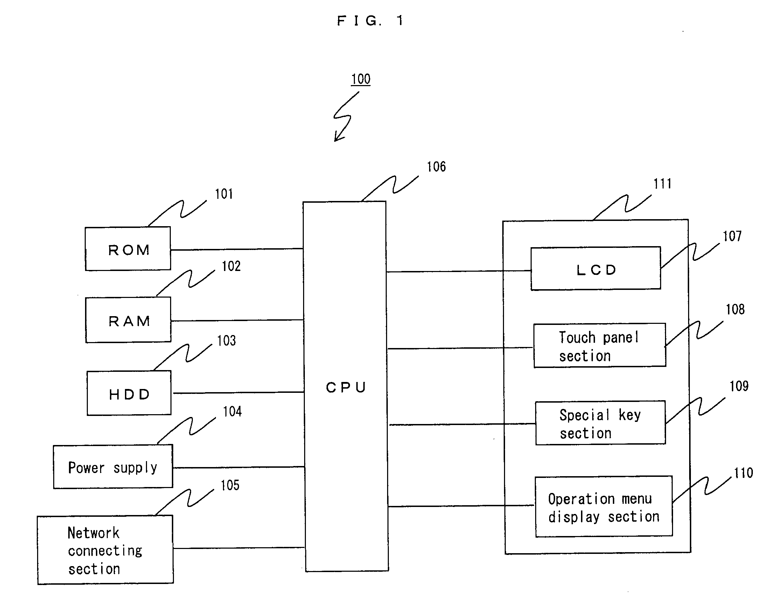

Referring now to FIG. 1, description will be given of a configuration of the information processor in an embodiment of the present invention. FIG. 1 shows the configuration of the information processor in a schematic block diagram. In FIG. 1, the information processor of the present invention is an information processor, for example, an electronic information terminal, a Personal Digital Assistant (PDA), a notebook PC, a tablet PC, or the like.

The configuration shown in FIG. 1 includes an information processor (to be referred to also as a personal computer (PC) hereinbelow) 100. The PC includes a Read Only Memory (ROM) 101, a Random Access Memory (RAM) 102, a Hard Disk Drive (HDD) 103, a power supply 104, a network connecting section 105, a Central Processing Unit (CPU) 106, and a touch panel display 111.

The ROM 101 is employed to store therein programs to control overall operation of the personal computer 100. The RAM 102 is a storage area in which programs stored in the ROM 101 are to be loaded. The HDD 103 is used to store therein application software of the personal computer 100 and to record therein contents such as Television (TV) programs received by a TV tuner, not shown. The power supply 104 supplies Alternating Current (AC) power or Direct Current (DC) to the personal computer 100. The network connecting section 105 is connected to networks such as internet, not shown, to serve as an interface for the networks. The CPU 106 controls the overall operation of the personal computer 100 and loads in a memory a control program stored in the ROM 101 and develops in the RAM 102 various data items obtained through operations of the personal computer 100.

The touch panel display 111 includes a Liquid Crystal Display (LCD) 107, a touch panel section 108, a special key section 109, and an operation menu display section 110. The LCD 107 configures a device to display results of information processing executed by the personal computer 100. The touch panel 108 provides a contact input function. Specifically, when the touch panel 108 senses pressure, static electricity, or the like applied thereto through input operations by a finger, a stylus pen, or the like, it supplies data of the pressure to the CPU 106. In the personal computer 100, input operations can be conducted by use of the touch panel section 108 in place of the operation input devices such as the hardware keyboard and the touch pad. Specifically, data items and commands can be inputted through an operation in which characters are directly written by bringing a finger or a stylus pen, not shown, into contact with the touch panel 108.

The special key section 109 is a tool to conduct a special key operation and is kept displayed in any situation on the right or left side of the touch display panel 111, which will be described later. In the operation menu display section 110, when an operation to retain or hold a tapped (contact) state of a special key (button) is carried out in the special key section 109, which will be described later, flick commands (operation menu) are displayed in a peripheral area of the flick button (special key) by dividing the area into a predetermined number of subareas. When the user leaves the finger from the special key, the flick commands (operation menu) vanish from the screen. The PC includes a function as below. Assuming, for example, that a hardware keyboard is connected to the PC 100, when a code generated through an operation in which one special key and any one of the ordinary keys, for example, "Ctrl" button and "c" button are simultaneously depressed is received, the PC 100 executes a command corresponding to the code.

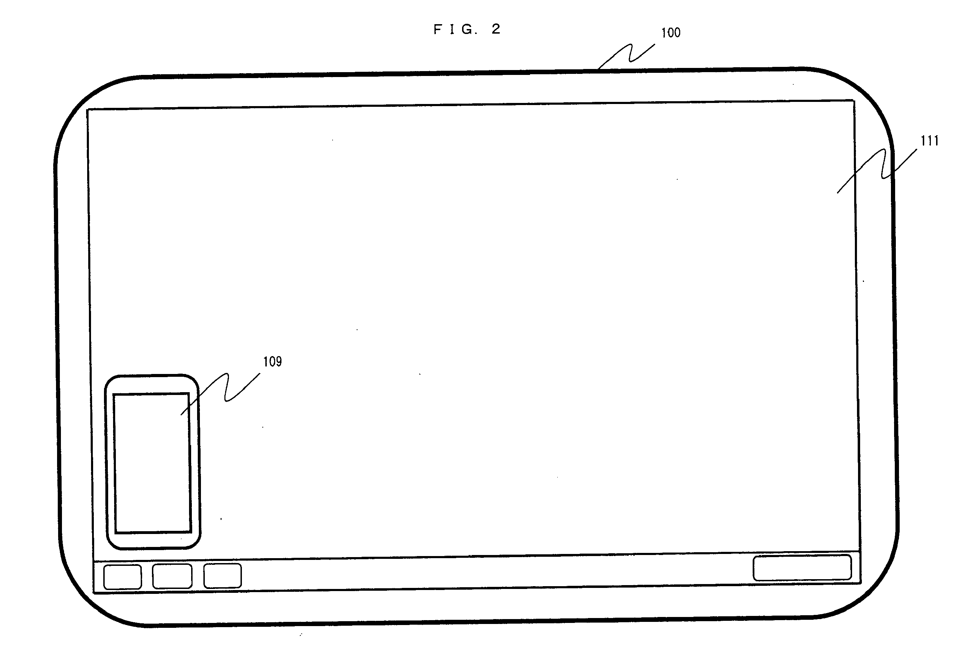

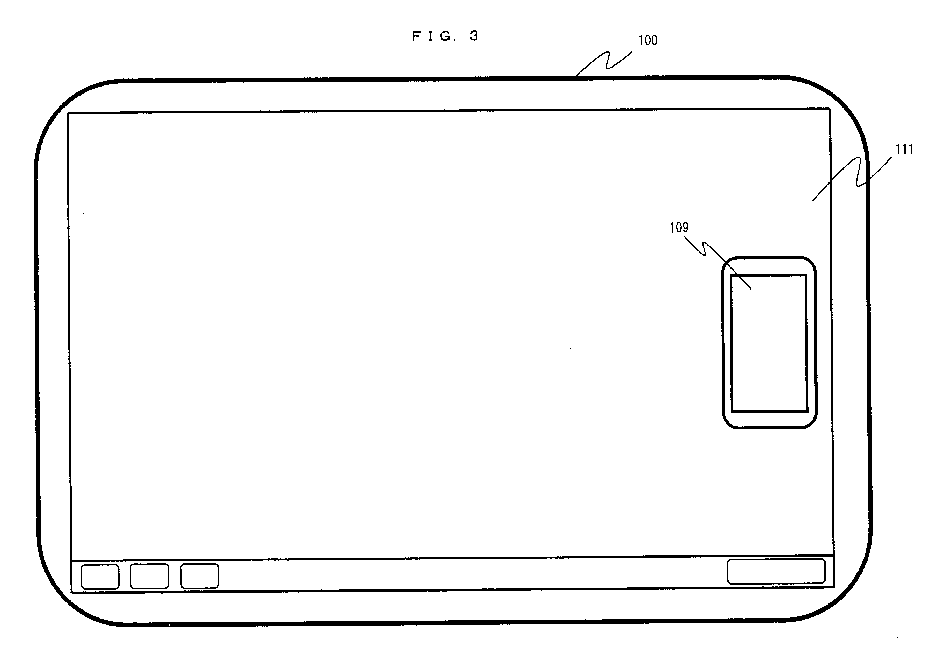

Next, referring to FIGS. 2 and 3, description will be given of a situation in which the special key section is presented on the touch panel display of the information processor.

FIG. 2 schematically shows a situation in which the special key section is displayed on the left side of the touch panel display 111 of the information processor. FIG. 3 schematically shows a situation in which the special key section is displayed on the right side of the touch panel display 111 of the information processor.

In the personal computer 100 placed in the landscape orientation, the special key section 109 is kept displayed in any situation on the lower-left area (in FIG. 2) or at substantially a central position on the right side (in FIG. 3) in substantially the rectangular touch panel display 111. The special key section 109 is displayed to be available without causing any uncomfortable feeling regardless of the display position thereof and is designed to be independent of the utilization state and the dominant hand of the user. According to the allocation of icons and windows on the touch panel display 111, the special key section 109 may be placed on the right or left side not to hinder the icons and windows.

Depending on the utilization state, it is possible for the user to change the display position of the special key section 109 by a single operation of a button. Although it is assumed in the description that the special key section 109 is placed on the left or right side as shown in FIG. 2 or 3, the special key section 109 may be placed at a position on the touch panel display 111 suitable for operations of the user, for example, near the upper side or the lower side of the touch panel display 111. That is, the special key section 109 is flexibly placed at an appropriate position on the touch panel display 111.

As a result, it is possible that for example, the right-handed user operates icons and windows as main or primary operations on the touch panel display 111 by fingers of the right hand and operates the special key section 109 placed on the left side of the touch panel display 111 as subordinate or cooperative operations by fingers of the left hand. In contrast, it is possible that the left-handed user operates icons and windows as main operations on the touch panel display 111 by fingers of the left hand and operates the special key section 109 placed on the right side of the touch panel display 111 as subordinate operations by fingers of the right hand.

The special key section 109 is kept presented on the touch panel display 111 in any situation. Hence, icons and the like concealed by the special key section 109 on the touch panel display 111 are not easily recognized in some cases. To prevent the disadvantageous situation, the special key section 109 may be presented as a semitransparent image on the touch panel display 111.

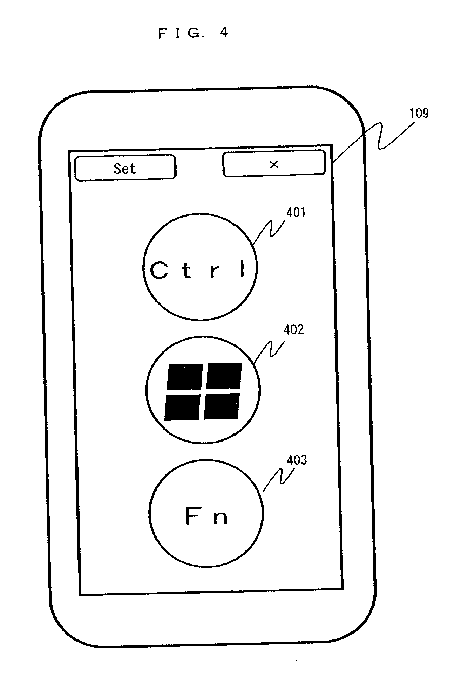

Referring next to FIG. 4, description will be given of the special key section of the information processor in the embodiment. FIG. 4 schematically shows the special key section 109 of the information processor.

In FIG. 4, the special key section 109 includes, for example, a Control (Ctrl) button 401, a Windows (registered trademark) button 402, and a Function (Fn) button 403. Each button is associated with a plurality of flick commands (operation menu), which will be described later. The flick commands associated with these buttons correspond to the shortcut function which is a combination of keys capable of executing a command without opening an associated menu in a personal computer including a hardware keyboard. That is, the Ctrl button 401, the Windows (registered trademark) button 402, and the Fn button 403 of the special key section 109 and the flick commands (operation menu), which will be described later, conform to combinations beforehand determined in the personal computer including a hardware key board.

For example, there exists a shortcut key to call a function of Windows or software on a Windows PC in place of selecting the function from a menu. For example, when the user depresses the c key of the alphabet keys while pressing the Ctrl key as the special key, the selected character is copied. When the user depresses the v key of the alphabet keys while pressing the Ctrl key as the special key, the copied character is pasted onto the copy destination. Ordinary keys constituting commands which are executed by a combination of a special key and an ordinary key other than the special keys are displayed, when the user conducts an operation to hold the tapped state of a key in the special key section 109, in the periphery of the button of the special key section 109 by subdividing the periphery into a predetermined number of areas.

Although three special keys are disposed as an example in the configuration of FIG. 4, a desired number of special keys may be arranged. Like in the situation in which icons and windows displayed on the touch panel section 108 are selected and activated through tapping operations, when the user conducts an operation to hold the Ctrl button 401, the Windows (registered trademark) button 402, or the Fn button 403 in the tapped state, flick commands (operation menu) beforehand associated with the special key are displayed in the periphery of the special key by subdividing the periphery into a predetermined number of areas, which will be described later.

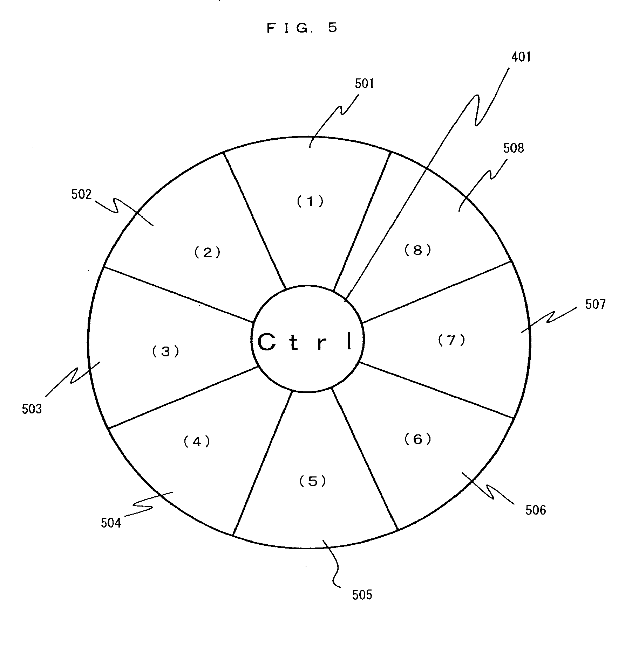

Next, description will be given of a display example of an operation menu displayed in response to an operation to hold the tapped state in the special key section of the information processor in the embodiment. FIGS. 5 to 9 are schematic diagrams to explain display examples of an operation menu displayed in response to an operation to hold the tapped state in the special key section of the information processor.

In FIG. 5, eight flick commands (1) to (8) are beforehand associated with special key "Ctrl" 401. Although not shown, flick commands are beforehand respectively associated with special key "Windows" 402 and special key "Fn" 403. As described above, the correspondences between the special keys 401 to 403 and the flick commands conform to the combinations beforehand determined in the personal computer including the hardware keyboard. Although eight flick commands are associated with one special key in the configuration of FIGS. 5 to 7, a desired number of flick commands may be arranged for each special key in the range of the number of codes beforehand determined between one special key and an associated normal key in the personal computer including the hardware keyboard.

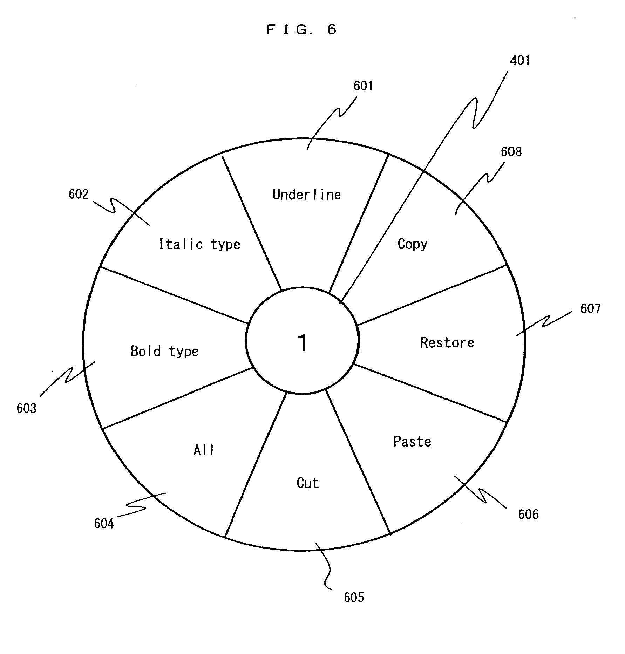

In FIG. 6, specific commands are assigned to eight flick commands (1) to (8) shown in FIG. 5. Assume, for example, a situation in which document creation software has been activated on the touch panel display 111. In the document input screen of the software, to copy part of sentences of a document during an editing operation onto a second location, a target area of the part of sentences is selected through a main operation in which a finger or the like is brought into contact with the touch panel section 108.

Next, when the user conducts an operation to hold special key "Ctrl" 401 of the special key section 109 in the tapped state, the flick commands ranging from underline 601 to copy 608 are displayed in the periphery of special key "Ctrl" 401. With the finger kept in contact with special key "Ctrl" 401, when the user conducts a flick operation to the area of the copy 608 and then removes the finger therefrom, the target area thus selected is copied (subordinate or cooperative operation). Thereafter, by bringing a finger into contact with the touch panel section 108, the user designates the copy destination area onto which the selected sentences are to be copied. With the finger kept in contact with special key "Ctrl" 401, when the user conducts a flick operation to the area of the paste 606 and then removes the finger therefrom, the selected sentences are copied onto the designated area.

That is, in the special key section 109, when an operation to hold a special key in the tapped state is conducted, the operation menu corresponding to the special key is displayed in the periphery of the special key by subdividing the periphery into a predetermined number of subareas. When the user selects an operation menu item from the operation menu thus displayed in the subdivided areas and conducts a flick operation to the area in which the selected operation menu item is displayed and then removes the finger therefrom, the processing associated with the selected operation menu item (coordinates) is executed.

As above, the flick commands are displayed when the user conducts an operation to hold one of the special keys 401 to 403 of the special key section 109 in the tapped state. Specifically, assuming that a hardware keyboard is connected to the personal computer, the system displays in the periphery of the special key a command menu from which the user can select a command to be executed corresponding to a code generated in response to an operation in which the special key and an associated normal key are simultaneously operated, in conformity with the combinations determined in advance.

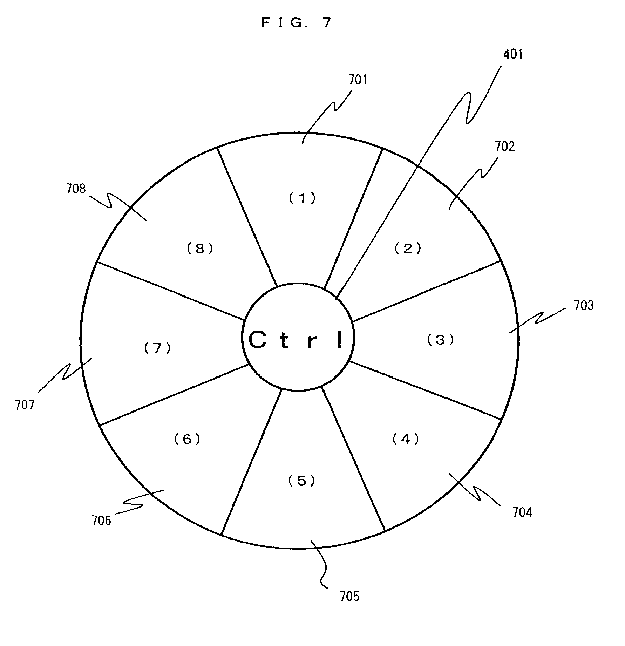

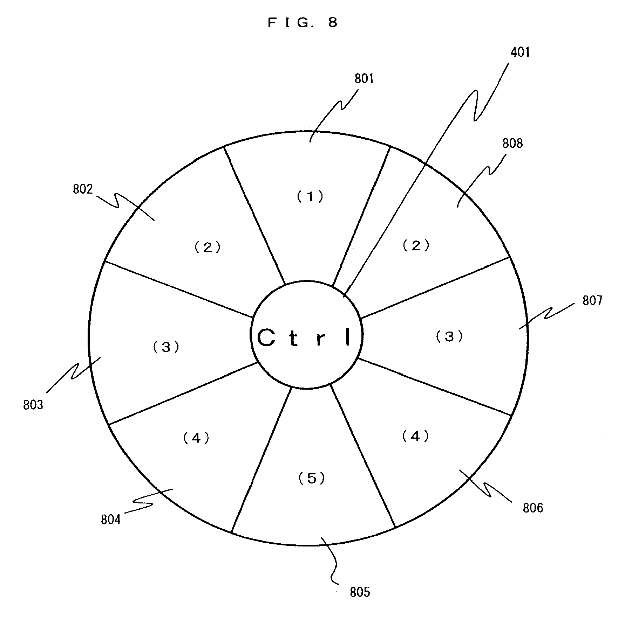

FIG. 7 shows the flick commands corresponding to special key "Ctrl" 401 arranged in the clockwise direction opposing to the counterclockwise direction in which the flick commands (1) to (8) in the periphery of the special key "Ctrl" 401 are arranged in FIG. 5. FIG. 8 shows an arrangement symmetrical about a line drawn lengthwise to pass the center of special key "Ctrl" 401 in FIG. 8 from that shown in FIGS. 5 to 7 in which the flick commands corresponding to special key "Ctrl" 401 are radially arranged. Specifically, the flick commands (1) to (5) corresponding to special key "Ctrl" 401 are arranged to be substantially symmetrical about a line drawn lengthwise to pass the center of special key "Ctrl" 401 in FIG. 8.

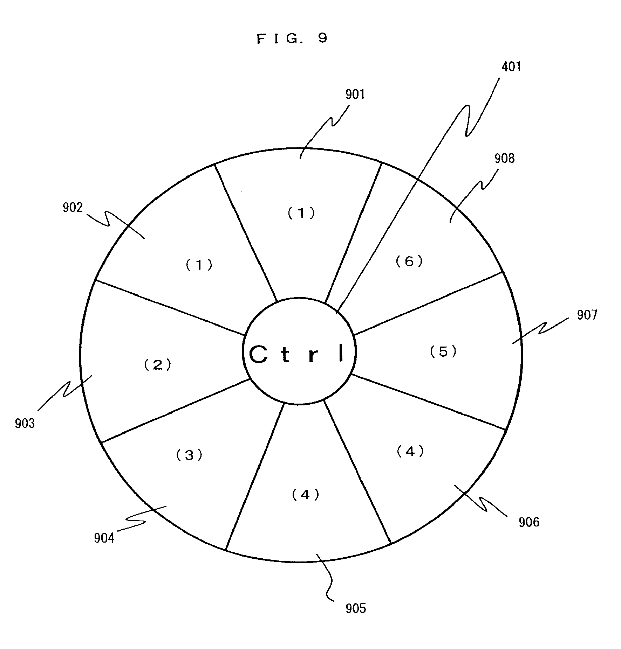

In the initial setting of the personal computer 100, the flick commands may be assigned to each special key in an asymmetric way such that the assignment of the commands is set in a symmetric way later by the user. As shown in FIG. 9, particular flick commands (flick commands (1) and (4) in FIG. 9) may be larger in the area than the other flick commands. This makes it possible that a user with thick fingers to select the target flick commands without touching the other flick areas. Also, one and the same flick command may be associated with a plurality of flick command areas. This improves operability in the selection of flick commands.

In the arrangement in which the special key section 109 is placed in the right or left side of the touch panel display 111, to facilitate the flick operation by a finger of the right or left hand, it is also possible that by operating a changeover button, not shown, the allocation of the flick commands to the special keys may be reversed at a time. Specifically, the flick commands on the left side and those on the right side are replaced with each other. Further, to visually indicate a special key touched by the finger and flick commands, the background of the selected special key and that of the flick commands under the flick operation may be colored or the colors of the backgrounds may be changed.

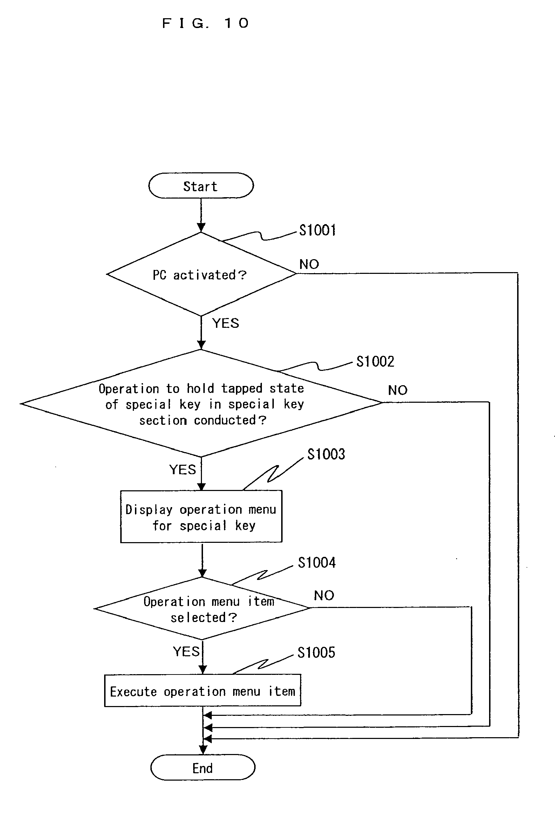

Next, description will be given of an operation of the information processor in the embodiment the present invention. FIG. 10 is a flowchart to explain the operation of the information processor. In FIG. 10, step 1001 (to be abbreviated as S1001 hereinbelow) judges whether or not the PC 100 has been activated. If the PC 100 has not been activated (no in S1001), the processing is terminated. If the PC 100 has been activated (yes in S1001), control goes to S102.

S1002 judges whether or not the operation to hold the tapped state of a special key of the special key section 109 has been conducted. If the operation has not been conducted (no in S1002), the processing is terminated. If the operation has been conducted (yes in S1002), control goes to S1003.

In S1003, an operation menu corresponding to the special key for which the operation to hold the tapped state has been conducted is displayed in the peripheral area of the special key by dividing the peripheral area into a predetermined number of subareas. As described above, the operation menu displayed in the subdivided areas is a command menu from which the user can select a command to be executed corresponding to a code generated in response to an operation in which the special key and an associated normal key are simultaneously operated when either one of the special keys 401 to 403 of the special key section 109 is tapped.

S1004 judges whether or not an operation menu item has been selected. The judgment is conducted based on an event in which an operation to hold the tapped state of a special key is conducted and a flick operation to an operation menu area is successively carried out and then the finger is removed from the screen. If no operation menu item has been selected (no in S1004), the processing is terminated. If an operation menu item has been selected (yes in S1004), control goes to S1005. In S1005, the operation menu item thus selected is executed. As a result, in a tablet PC, it is possible to establish an operation environment almost equal to that in which a shortcut function is conducted in a personal computer including a hardware keyboard.

The operations of the functional blocks constituting the information processor 100 of the embodiment shown in FIG. 10 may be carried out by programs on a computer. That is, the CPU 106 of the information processor 100 loads therein the programs stored in the storage media such as the ROM 101 and the RAM 102 and then sequentially executes processing steps of the programs.

As described above, in accordance with the present invention, there is provided an information processor in which it is possible to implement the shortcut operation conventionally accomplished on the hardware keyboard, to thereby improve operability based on intuitive operation of the tablet terminal. The information processor includes:
a keyboard connecting section for receiving a code from a keyboard including a plurality of ordinary keys each of which generates a predetermined code according to an operation and a plurality of special keys each of which changes the predetermined code generated by the ordinary key according to an operation;
a command executing section for executing a predetermined command at reception of a code generated when the special key and the ordinary key are simultaneously operated;
a touch panel display for displaying an operation button;
a detecting section for detecting contact with the operation button; and
a display section for displaying, on the touch panel display, an operation menu including a predetermined number of operation menu items determined in advance, the operation menu items being assigned to the operation button the contact with which is detected by the detecting section, wherein
the display section displays, as the operation menu at detection of the contact with the operation button, a command menu from which it is possible to select a command to be executed corresponding to a code generated in response to an operation in which one of the special keys and one of the normal keys are simultaneously operated, and
the command executing section executes the predetermined command when either one command is selected from the operation menu successively after the contact with the operation button.

While the present invention has been described with reference to the particular illustrative embodiment, it is not to be restricted by the embodiment but only by the appended claims. It is to be appreciated that those skilled in the art can change or modify the embodiment without departing from the scope and spirit of the present invention.

## Claims

1. An information processor, comprising:
keyboard connecting means for receiving a code from a keyboard comprising a plurality of ordinary keys each of which generates a predetermined code according to an operation and a plurality of special keys each of which changes the predetermined code generated by the ordinary key according to an operation;
command executing means for executing a predetermined command at reception of a code generated when the special key and the ordinary key are simultaneously operated;
a touch panel display for displaying an operation button;
detecting means for detecting contact with the operation button; and
display means for displaying, on the touch panel display, an operation menu including a predetermined number of operation menu items determined in advance, the operation menu items being assigned to the operation button the contact with which is detected by the detecting means, wherein
the display means displays, as the operation menu at detection of the contact with the operation button, a command menu from which it is possible to select a command to be executed corresponding to a code generated in response to an operation in which one of the special keys and one of the normal keys are simultaneously operated, and
the command executing means executes the predetermined command when either one command is selected from the operation menu successively after the contact with the operation button.

2. An information processor in accordance with claim 1, wherein the operation button is kept displayed in any situation in an arbitrary place on the touch panel display.

3. An information processor in accordance with claim 1, wherein the operation button is displayed as a semitransparent image on the touch panel display.

4. An information processor in accordance with claim 2, wherein the operation button is displayed as a semitransparent image on the touch panel display.

5. An information processor in accordance with claim 1, wherein the operation button includes a predetermined number of buttons, and
when contact with one of the buttons is detected, a command menu from which it is possible to select a command to be executed corresponding to a code generated in response to an operation in which the button and one of the normal keys are simultaneously operated is displayed as the operation menu in the periphery of the button the contact with which is detected.

6. An information processor in accordance with claim 2, wherein the operation button includes a predetermined number of buttons, and
when contact with one of the buttons is detected, a command menu from which it is possible to select a command to be executed corresponding to a code generated in response to an operation in which the button and one of the normal keys are simultaneously operated is displayed as the operation menu in the periphery of the button the contact with which is detected.

7. An information processor in accordance with claim 3, wherein the operation button includes a predetermined number of buttons, and
when contact with one of the buttons is detected, a command menu from which it is possible to select a command to be executed corresponding to a code generated in response to an operation in which the button and one of the normal keys are simultaneously operated is displayed as the operation menu in the periphery of the button the contact with which is detected.

8. An information processor in accordance with claim 4, wherein the operation button includes a predetermined number of buttons, and
when contact with one of the buttons is detected, a command menu from which it is possible to select a command to be executed corresponding to a code generated in response to an operation in which the button and one of the normal keys are simultaneously operated is displayed as the operation menu in the periphery of the button the contact with which is detected.

9. A control method for use with an information processor, comprising:
keyboard connecting means for receiving a code from a keyboard comprising a plurality of ordinary keys each of which generates a predetermined code according to an operation and a plurality of special keys each of which changes the predetermined code generated by the ordinary key according to an operation;
command executing means for executing a predetermined command at reception of a code generated when the special key and the ordinary key are simultaneously operated; and
a touch panel display for displaying an operation button, the control method comprising:
a step of detecting contact with the operation button;
a step of displaying, on the touch panel display, an operation menu including a predetermined number of operation menu items determined in advance, the operation menu items being assigned to the operation button the contact with which is detected by the detecting step;
a step of displaying, as the operation menu at detection of the contact with the operation button, a command menu from which it is possible to select a command to be executed corresponding to a code generated in response to an operation in which one of the special keys and one of the normal keys are simultaneously operated; and
a step of executing the predetermined command when either one command is selected from the operation menu successively after the contact with the operation button.

10. A program for use with a computer of an information processor, comprising:
keyboard connecting means for receiving a code from a keyboard comprising a plurality of ordinary keys each of which generates a predetermined code according to an operation and a plurality of special keys each of which changes the predetermined code generated by the ordinary key according to an operation;
command executing means for executing a predetermined command at reception of a code generated when the special key and the ordinary key are simultaneously operated; and
a touch panel display for displaying an operation button, the program making the information processor execute:
processing for detecting contact with the operation button;
processing for displaying, on the touch panel display, an operation menu including a predetermined number of operation menu items determined in advance, the operation menu items being assigned to the operation button the contact with which is detected by the detecting processing;
processing for displaying, as the operation menu at detection of the contact with the operation button, a command menu from which it is possible to select a command to be executed corresponding to a code generated in response to an operation in which one of the special keys and one of the normal keys are simultaneously operated; and
processing for executing the predetermined command when either one command is selected from the operation menu successively after the contact with the operation button.
